# EUROPEAN PATENT SPECIFICATION

(11) **EP 1 787 776 B1**
(45) Date of publication and mention of the grant of the patent: **04.04.2012**
(21) Application number: 06124018.0
(22) Date of filing: 14.11.2006
(51) Int. Cl.: B27B 31/04, B65G 47/244, B65G 47/52, B27B 31/00

(54) **Log turning apparatus for a sawmill machine**
Vorrichtung zum Wenden eines Baumstammes für eine Sägeanlage
Appareil pour tourner des troncs d'arbres pour une scierie

(30) Priority: 18.11.2005 FI 20051178
(43) Date of publication of application: 23.05.2007
(73) Proprietor: Tähkä OY, FIN-64260 Kaskinen (FI)
(72) Inventor: Klockars, Bengt, FI-64300, Lapväärtti (FI); Metsänranta, Esko, FI-64260, Kaskinen (FI); Rossi, Tapani, FI-64260, Kaskinen (FI)
(74) Representative: Svensson, Johan Henrik

(56) References cited:
- EP-A- 1 407 864
- DE-A1- 3 217 293
- FR-A- 2 139 247
- US-A- 3 141 482
- US-A- 3 960 267

## Description

This invention relates to a log turning apparatus for a sawmill machine according to the preamble of claim 1

Such a turning apparatus is known from EP 1 407 864 A1.

In prior known sawmill machines, the logs proceed onto a conveyor after the turning apparatus and are passed therefrom onto a longitudinal conveyor of the sawmill machine. Every time a log is passed from one place to another, the transfer takes time as the log starts moving, as the log is moving, and as its motion slows down again before the next processing site.

In document EP 1 407 864 is presented an arrangement for feeding logs to a conveyor. This arrangement includes feed conveyor, pivoting fork, opening under fork, intermediate stopper under opening and lateral conveyor where the logs are moved along a slide. With this kind of an arrangement the position control of the logs on the lateral conveyor is not on very high level.

It is an object of this invention to provide a novel type of log turning apparatus for a sawmill machine, by means of which the processing motions of a log are accelerated. A log turning apparatus of the invention is defined by the features of independent claim 1.

Various embodiments of the invention are defined by the features of the dependent claims 1-8 of the appended set of claims.

The invention enables a transfer of the log from a log turning apparatus onto a conveyor to proceed considerably faster as the log falls from the log turning apparatus onto an intermediate stopper directly below and hence directly by way of a well and a log lift onto a lateral conveyor. All movements of the log can be sequenced by way of automatics such that the movements are slow to start with, then accelerated to a maximum and respectively decelerated before coming to a halt. This applies both to swinging motions in the log turning apparatus and to movements in the intermediate stopper and in the log lift. These so-called flexible movements enable a considerably faster passage of logs through a sawmill machine.

The invention will now be described by way of example with reference to the accompanying drawings, in which
- fig. 1: shows a log turning apparatus for a sawmill machine in a side view,
- fig. 2: shows the log turning apparatus in a plan view before the log is turned,
- fig. 3: shows the same as fig. 1, but the log has been turned by about 45° to the right, and

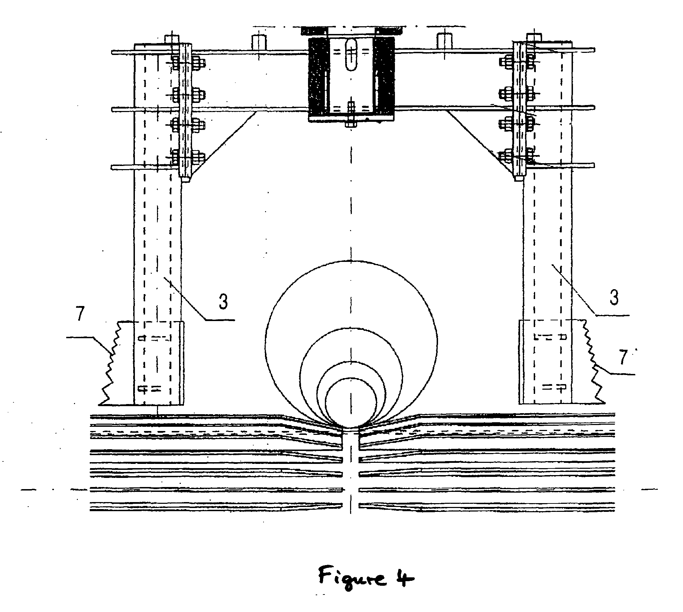

- fig. 4: shows a pivoting fork in an enlarged view.

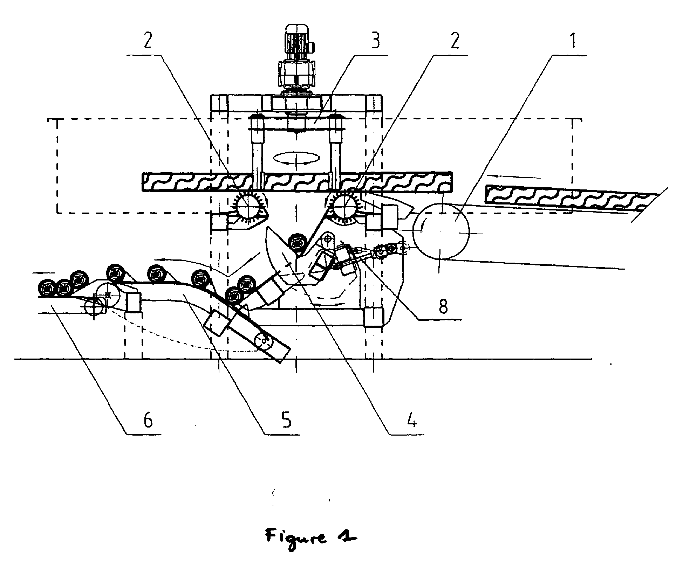

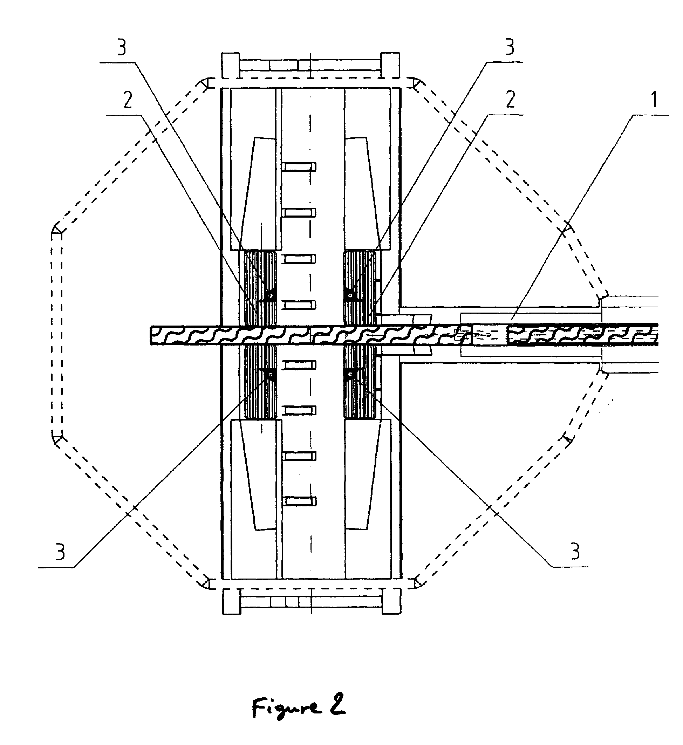

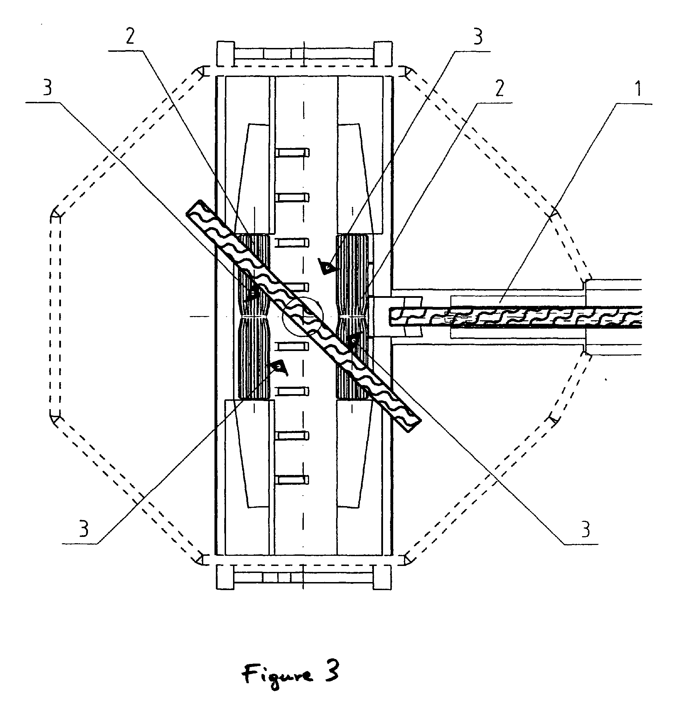

Referring to figs. 1, 2 and 3, logs are supplied along a feed conveyor 1 in a longitudinal direction. The spaces between logs can be as little as less than 0,5 m and the speeds can be as high as 200 m/min. The feed conveyor is furnished with a log gauge or some other measuring instrument capable of defining the butt/top sense of a log on the conveyor.

The logs are supplied by the conveyor onto the top of a log turner's centering rolls 2. The fluted and centrally V-shaped rolls rotate in opposite directions, centering the logs according to the center of gravity and/or the midpoint. The rolls have a speed which is in a certain proportion to that of the feed conveyor 1.

The turning moment and the sense of turning are determined by means of automatics. The automatics receives its data from a log gauge, a distance sensor and photocell, and activates an overhead pivoting fork 3, which includes four pivoting arms at 90° relative to each other and at a distance very close to the roll 2. The pivoting arms have their ends provided with a tooth system 7, preventing the log from slipping at the moment of turning. When the pivoting fork 3 begins its turning motion, the pivoting arms come to contact with the log and lift it first from a V-recess of the centering rolls 2 to lie on top of the rolls. As the rolls are long and fluted, as well as rotating in senses opposite to each other, the log turns very quickly and effortlessly escorted by the pivoting arms. The pivoting fork 3 may have a drive which is electromechanical or hydraulic and it only turns through 90° at a time towards a log and its speed is set according to that of the feed conveyor 1.

While in the process of turning, the log falls down onto an intermediate stopper 4. The purpose of this is to shorten the falling distance, to straighten a log possibly arriving in a misaligned position, to bring down a noise level, etc. The intermediate stopper 4 can be used for collecting a single large or several small logs. The intermediate stopper 4 is provided with noise abatement bars and its reciprocating action may be electromechanical or hydraulic. As the fall continues from the intermediate stopper, the logs are guided into the well of a log lift 5. The purpose of this is also to shorten the falling distance, to straighten a log possibly arriving in a misaligned position, to bring down a noise level, etc. The log lift's 5 well can be used for collecting a single large or several small logs. The log lift 5 has its bottom end provided with noise suppression and the lift delivers logs crosswise one or more at a time between the flights onto a lateral conveyor 6 that follows. The lateral conveyor 6 is used for collecting logs in the form of a long log carpet or small logs several on top of each other.

The intermediate stopper 4 need not necessarily be a hook-shaped reciprocating element as it can be just as well a star-shaped wheel or another such element, which rotates always in the same direction and keeps dropping logs.

The angle of inclination for hoist brackets present at the ends of the pivoting arms 3 need not be necessarily the same as the angle of a V-shaped recess in the middle of the centering rolls, but it can vary.

## Claims

1. A log turning apparatus for a sawmill machine, which is supplied with logs one by one from a feed conveyor (1) and which log turning apparatus comprises a pivoting fork (3) capable of effecting a log turning motion to the right or left for bringing a desired end of the log, a buttltop, to always point the same way, an intermediate stopper (4) upon which the log, while turning, falls through an opening present below the pivoting fork (3), as well as a lateral conveyor (6), **characterized in that**, in connection with the pivoting fork (3) on either side of the fall opening, there are centering rolls (2) establishing a pair of centering rolls, and downstream of the intermediate stopper (4) the apparatus is provided with a log lift well and a log lift (5) which transfers the logs onto the lateral conveyor (6).

2. A log turning apparatus as set forth in claim 1, **characterized in that** the intermediate stopper (4) consists of hook-like support members capable of being actuated between support and release positions by means of a connecting rod (8) or any other mechanical or hydraulic actuator enabling a reciprocating motion.

3. A log turning apparatus as set forth in claims 1 and 2, **characterized in that** the intermediate stopper is a star-shaped wheel which rotates always in the same direction, dropping logs into the well of a log lift.

4. A log turning apparatus as set forth in claim 2 or 3, **characterized in that** the intermediate stopper (4) has an inclined bottom, from which the log continues its downward passage by virtue of gravity by way of the well and the log lift (5) further onto a lateral conveyor (6).

5. A log turning apparatus as set forth in any of the preceding claims, **characterized in that** the pivoting fork (3) has the ends of its pivoting arms fitted with hoist brackets whose angle of inclination is equal to the angle of a V-shaped recess present in the middle of the centering rolls.

6. A log turning apparatus as set forth in claim 5, **characterized in that** the hoist brackets have a tooth system (7) along the edge thereof.

7. A log turning apparatus as set forth in any of the preceding claims, **characterized in that** all four devices, the centering roll (2), the pivoting forks (3), the intermediate stopper (4), the well and the log lift (5), are controlled by automatics such that the devices are capable of being synchronized relative to each other.

8. A log turning apparatus as set forth in claim 7, **characterized in that** said control automatics accelerates and decelates the logs maneuvering when needed.

## Patentansprüche

1. Baumstammwendevorrichtung für eine Sägewerk-Maschine, der nacheinander mittels eines Förderbandes (1) Baumstämme zugeführt werden und die Baumstammwendevorrichtung eine Wendegabel (3) umfasst, die geeignet ist, eine Drehbewegung des Baumstamms nach rechts oder links zu bewirken, um ein gewünschtes Ende des Baumstamms, einen Baumstrunk/Baumspitze stets in die gleiche Richtung zeigen zu lassen; einen zwischengelagerten Halter (4), auf den der Baumstamm durch eine Öffnung, die sich unterhalb der Wendegabel (3) befindet, bei der Drehbewegung fällt; als auch ein seitliches Förderband (6), **dadurch gekennzeichnet, dass** in Verbindung mit der Wendegabel (3) auf beiden Seiten der Fallöffnung Zentrierwalzen (2) angebracht sind, die ein Paar von Zentrierwalzen bilden; und dem zwischengelagerten Halter (4) nachfolgend die Vorrichtung mit einem Baumstammhebeschacht und einer Baumstammhebevorrichtung (5) ausgestattet ist, die die Baumstämme auf das seitliche Förderband (6) befördert.

2. Baumstammwendevorrichtung nach Anspruch 1, **dadurch gekennzeichnet, dass** der zwischengelagerte Halter (4) aus hakenartigen Stützelementen besteht, die geeignet sind, zwischen einer Stützposition und einer Löseposition mit einer Verbindungsstange (8) oder jeglichen anderen mechanischen oder hydraulischen Aktuator, der ein Hin- und Herbewegen erlaubt, betätigt zu werden.

3. Baumstammwendevorrichtung nach Anspruch 1 oder 2, **dadurch gekennzeichnet, dass** die zwischengelagerte Halterung ein sternförmiges Rad ist, welches sich stets in die gleich Richtung dreht und die Baumstämme in den Schacht der Baumstammhebevorrichtung auswirft.

4. Baumstammwendevorrichtung nach Anspruch 2 oder 3, **dadurch gekennzeichnet, dass** der zwischengelagerte Halter (4) eine geneigte Unterseite aufweist, von der aus der Baumstamm mittels Schwerkraft seinen Abwärtsweg über den Schacht und die Baumstammhebevorrichtung (5) weiter zum seitlichen Förderband (6) fortsetzt.

5. Baumstammwendevorrichtung nach einem der vorherigen Ansprüche, **dadurch gekennzeichnet, dass** die Wendegabel (3) an den Enden ihrer Wendearme mit Hebeklammem versehen ist, deren Neigungswinkel gleich dem Winkel einer V-förmigen Vertiefung ist, die in der Mitte der Zentrierwalzen ausgebildet ist.

6. Baumstammwendevorrichtung nach Anspruch 5, **dadurch gekennzeichnet, dass** die Hebeklammem entlang ihrer Kante ein Zahnungssystem (7) aufweisen.

7. Baumstammwendevorrichtung nach einen der vorherigen Ansprüche, **dadurch gekennzeichnet, dass** alle vier Geräte, die Zentrierwalze (2), die Wendegabel (3), der zwischengelagerte Halter (4), der Schacht und die Baumstammhebevorrichtung (5) über eine Automatik gesteuert werden, so dass die Geräte geeignet sind, in Bezug zueinander synchronisiert zu werden.

8. Baumstammwendevorrichtung nach Anspruch 7, **dadurch gekennzeichnet, dass** die Steuerautomatik die Bewegung der Baumstämme, wenn notwendig, beschleunigt oder verzögert.

## Revendications

1. Appareil pour tourner des troncs d'arbre pour une machine de scierie, qui est alimenté en troncs d'arbre, un à un, par un convoyeur d'alimentation (1), et lequel appareil pour tourner des troncs d'arbre comprend une fourche pivotante (3) pouvant effectuer un mouvement de rotation de tronc d'arbre vers la droite ou la gauche pour amener une extrémité souhaitée du tronc d'arbre, un bout/sommet, à toujours être orienté(e) de la même manière, une butée intermédiaire (4) sur laquelle le tronc, tout en tournant, tombe par une ouverture présente au-dessous de la fourche pivotante (3), ainsi qu'un convoyeur latéral (6), **caractérisé en ce que**, conjointement avec la fourche pivotante (3) de chaque côté de l'ouverture de chute, on trouve des rouleaux de centrage (2) établissant une paire de rouleaux de centrage, et en aval de la butée intermédiaire (4), l'appareil est doté d'une gaine de chargeur vertical et d'un chargeur vertical (5) qui transfère les troncs d'arbre sur le convoyeur latéral (6).

2. Appareil pour tourner des troncs d'arbre selon la revendication 1, **caractérisé en ce que** la butée intermédiaire (4) se compose d'éléments de support en forme de crochet pouvant être actionnés entre les positions de support et de libération au moyen d'une tige de raccordement (8) ou de n'importe quel autre actionneur mécanique ou hydraulique permettant un mouvement de va-et-vient.

3. Appareil pour tourner des troncs d'arbre selon les revendications 1 et 2, **caractérisé en ce que** la butée intermédiaire est une roue en forme d'étoile qui tourne toujours dans la même direction, laissant tomber les troncs d'arbre dans la gaine d'un chargeur vertical.

4. Appareil pour tourner des troncs d'arbre selon la revendication 2 ou 3, **caractérisé en ce que** la butée intermédiaire (4) a un fond incliné, à partir duquel le tronc d'arbre continue son passage descendant en vertu de la gravité au moyen de la gaine et du chargeur vertical (5) sur un convoyeur latéral (6).

5. Appareil pour tourner des troncs d'arbre selon l'une quelconque des revendications précédentes, **caractérisé en ce que** la fourche pivotante (3) a les extrémités de ses bras pivotants équipées de supports de levage dont l'angle d'inclinaison est égal à l'angle d'un évidement en forme de V présent au centre des rouleaux de centrage.

6. Appareil pour tourner des troncs d'arbre selon la revendication 5, **caractérisé en ce que** les supports de levage ont un système de dent (7) le long de leur bord.

7. Appareil pour tourner des troncs d'arbre selon l'une quelconque des revendications précédentes, **caractérisé en ce que** les quatre dispositifs, le rouleau de centrage (2), les fourches pivotantes (3), la butée intermédiaire (4), la gaine et le chargeur vertical (5), sont commandés par des automatismes de sorte que les dispositifs peuvent être synchronisés les uns par rapport aux autres.

8. Appareil pour tourner des troncs d'arbre selon la revendication 7, **caractérisé en ce que** lesdits automatismes de commande accélèrent et ralentissent la manoeuvre des troncs d'arbre lorsque cela est nécessaire.
